# EUROPÄISCHE PATENTSCHRIFT

(11) **EP 0 393 321 B1**
(45) Veröffentlichungstag und Bekanntmachung des Hinweises auf die Patenterteilung: **11.08.1993**
(21) Anmeldenummer: 90102849.8
(22) Anmeldetag: 14.02.1990
(51) Int. Cl.: B23B 31/163, B23B 33/00

(54) **Vorrichtung zum Mitnehmen eines zwischen Spitzen gehaltenen Werkstücks**
Device for driving a piece clamped between pins
Dispositif pour entraîner une pièce maintenue entre pointes

(30) Priorität: 19.04.1989 DE 3912786
(43) Veröffentlichungstag der Anmeldung: 24.10.1990
(73) Patentinhaber: Georg Karstens GmbH Fabrik für Messgeräte und Spezialmaschinen, D-73760 Ostfildern (DE)
(72) Erfinder: Schmidt, Manfred, D-7302 Ostfildern 1 (DE)
(74) Vertreter: Hosenthien, Heinz

(56) Entgegenhaltungen:
- DE-A- 3 532 942
- DE-C- 116 619
- FR-A- 2 583 666
- US-A- 4 616 538

## Beschreibung

Die Erfindung betrifft eine Vorrichtung zum Mitnehmen eines zwischen Spitzen einer Werkzeugmaschine, insbesondere einer Rundschleifmaschine, Drehbank o.dgl. gehaltenen, um eine Drehachse angetriebenen Werkstücks mit einem ein Ende des Werkstücks aufnehmenden Spannelement, das mit einer angetriebenen Spitze über mindestens einen Mitnehmer drehgekoppelt ist und das mindestens zwei über ein Plangewinde symmetrisch gegeneinander bewegbare, das Ende des Werkstücks lösbar festhaltende in einer Trägerplatte verschiebbar geführte Spannbacken aufweist, vgl. DE-C- 116 619.

Bei einer solchen einem ringförmigen Backenfutter ähnlichen Vorrichtung, die nach dem bekannten Prinzip der Planspirale aufgebaut ist, sind zwei symmetrisch aufgebaute, jeweils ein Plangewinde tragende Scheiben drehbar beiderseits einer Trägerplatte drehbar geführt und über einen Spannschlüssel drehbar. Diese Mitnehmervorrichtung kann nur von Hand gespannt und wieder gelöst werden. Der quer im Backenfutter eingesetzte Spannschlüssel kann, wenn er vergessen wird abzuziehen, Schaden anrichten.

Bei einer aus der DE-35 32 942 A1 bekannten ähnlichen Vorrichtung muß das Spannelement zum Spannen und Lösen mittels eines Schraubers in eine ganz bestimmte Winkellage gebracht werden, was eine aufwendige Steuerung erforderlich macht. Der Aufbau des Spannelements ist darüber hinaus relativ aufwendig und voluminös.

In Vermeidung der geschilderten Nachteile liegt der vorliegenden Erfindung die Aufgabe zugrunde eine Vorrichtung der eingangs genannten Art so zu verbessern, daß bei einfachem Aufbau ein Spannen und Lösen des Werkstücks ohne besonderes Werkzeug sicher möglich ist.

Zur Lösung dieser Aufgabe sieht die Erfindung vor, daß das Spannelement eine drehfest mit der Spitze verbundene Mitnehmerscheibe aufweist, die das die Spannbacken bewegendes Plangewinde trägt und daß die Trägerplatte oder die Spannbacken mit einem von der angetriebenen Spitze drehunabhängigen Stoppanschlag zum Spannen oder Lösen der Spannbacken zusammenwirkt.

Durch die Anordnung des oder der maschinenfesten Stoppanschläge kann der Drehantrieb für das Werkstück direkt zum Spannen und Lösen des Spannelements verwendet werden, so daß bei automatischem Spannen und Lösen kein besonderer Antrieb zum Bewegen der Spannbacken notwendig ist und auch keine definierte Winkellage des Spannelements angesteuert werden muß. Die Vorrichtung kann daher bei relativ geringem Konstruktionsgewicht raumsparend, insbesondere Konstrukionslänge sparend ausgebildet werden.

Ein ruhiger Lauf des Spannelements mit optimal geringer Unwucht kann dadurch einfach erreicht werden, daß die die radiale verschiebbare Spannplatten tragende Trägerplatte und die das Plangewinde aufweisende Mitnehmerscheibe um die Drehachse gegeneinander drehbar aneinander geführt werden. Ein konzentrischer Umlauf um die Drehachse bei symmetrischer Massenverteilung ist so einfach und dauerhaft erreichbar.

Um einen vorzugsweise automatischen Werkstückwechsel störungsfrei zu gewährleisten kann die Trägerplatte mit radialem Spiel von mindestens einem, vorzugsweise drei Mitnehmern eines mit der angetriebenen Spitze umlaufenden Tragkranzes, etwa konzentrisch zur Drehachse getragen sein. Bei einer etwas außermittigen Zuführung des Werkstücks kann dann das Trägerplatte und Mitnehmerscheibe aufweisende Spannelemente etwas ausweichen und es ist dabei nicht unbedingt erforderlich, die Spannbacken weit zu öffnen. Die Zeit zum Spannen und Lösen des Werkstücks kann so zur Erhöhung der Produktivität optimiert kurzgehalten werden.

Nachdem der Drehantrieb für das Werkstück, insbesondere bei niederen Drehzahlen, ein hohes Drehmoment aufbringen kann, ist es erforderlich, das Anziehmoment zum Spannen der Drehbacken zu begrenzen. Dies kann besonders vorteilhaft dadurch erfolgen, daß direkt der Stoppanschlag über eine Drehmomentbegrenzung steuerbar ist, wobei dann der Stoppanschlag bei Überschreiten eines vorgewählten Drehmoments zurückgezogen und die Trägerplatte freigegeben wird. Hierzu kann der Stoppanschlag in Umfangsrichtung gegen eine Feder verschiebbar sein und mit einem Schalter oder Fühler zusammenwirken, über den der Stoppanschlag bei Drehmomentüberschreitung gelöst wird.

Konstruktiv einfach kann der Stoppanschlag als Kipphebel ausgebildet auf einem in Umfangsrichtung verlaufenden Bolzen schwenkbar gelagert sein. Dieser Bolzen oder der Kipphebel kann gegen die Wirkung einer Feder gegen den Schalter oder Fühler verschiebbar geführt sein. Die Betätigung des Kipphebels selber kann über ein Kraftelement in Form eines Hubmagnets, einen Kraftzylinder oder auch einer sonst bekannten Bewegungsvorrichtung erfolgen, wobei der Stoppanschlag in radialen Schlitzen, vorzugsweise eines Tragrings bewegbar angeordnet sein kann.

Zum definierten Lösen der Werkstückeinspannung kann ein Impulszähler vorgesehen sein, durch den die Bewegung der Spannbacken im Plangewinde bzw. der die Spannbacken tragenden Trägerplatte relativ zur Mitnehmerscheibe bestimmbar ist.

Damit kann die Lösebewegung des Spannelements nach Durchlauf eines vorbestimmten Drehwinkels gestoppt werden, um so die Spann- und Lösezeiten zu optimieren, unter Berücksichtigung der Durchmessertoleranzen des Werkstücks. Ggf. können hier bei wechselnder Bearbeitung unterschiedlicher Werkstücke die unterschiedlichen Werkstückdurchmesser im Bereich des Spannelements EDV-gesteuert berücksichtigt werden.

Weitere erfindungsgemäße Ausbildungen sind den Unteransprüchen zu entnehmen und werden mit Ihren Vorteilen anhand der beigefügten Zeichnungen in der nachstehenden Beschreibung näher erläutert. Es zeigt:

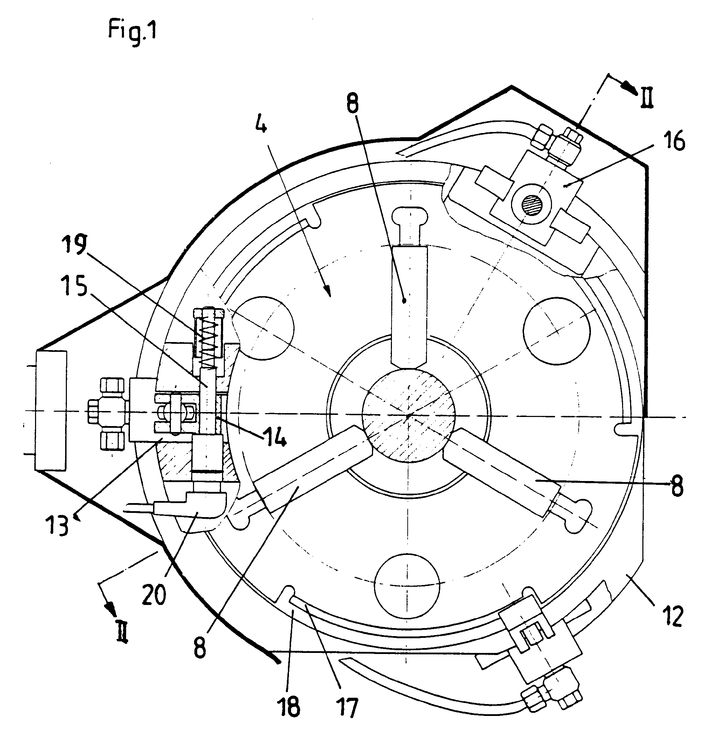

- Figur 1: eine Ansicht einer Vorrichtung von der Werkstückseite her, teilweise geschnitten und
- Figur 2: einen Schnitt entlang der Linie II-II in Figur 1, in etwas größerem Mapstab.

Am Ende eines nicht näher dargestellten Spindelstocks einer Bearbeitungsmaschine, bspw. einer Schleifmaschine oder einer Drehbank ist über einen Drehantrieb eine Spitze 1 synchron mit einem Trägerkranz 2 um eine Drehachse 3 antreibbar. Vom Trägerkranz 2 wird ein Spannelement 4 getragen, das rotationssymmetrisch zur Drehachse 3 ausgebildet ist.

Dieses Spannelement 4 weist eine Mitnehmerscheibe 5 auf, die von drei Mitnehmern 6 des Trägerkranzes 2 mit etwas radialem und axialem Spiel getragen wird. Die Mitnehmerscheibe 5 trägt ein Plangewinde 7, über das drei Spannbacken 8 radial bewegt werden können. Die Spannbacken 8 selbst sind radial verschiebbar in einer Trägerplatte 9 geführt. Über die drei Spannbacken 8 ist ein Ende 10 eines von der Spitze 1 getragenen Werkstücks 11 drehfest gehalten. Die Drehbewegung der Spitze 1 und des Trägerkranzes wird über das Spannelement 4 auf das Werkstück 11 übertragen. Die Mitnehmerscheibe 5 und die Trägerplatte 9 sind konzentrisch gegeneinander verdrehbar aneinander geführt.

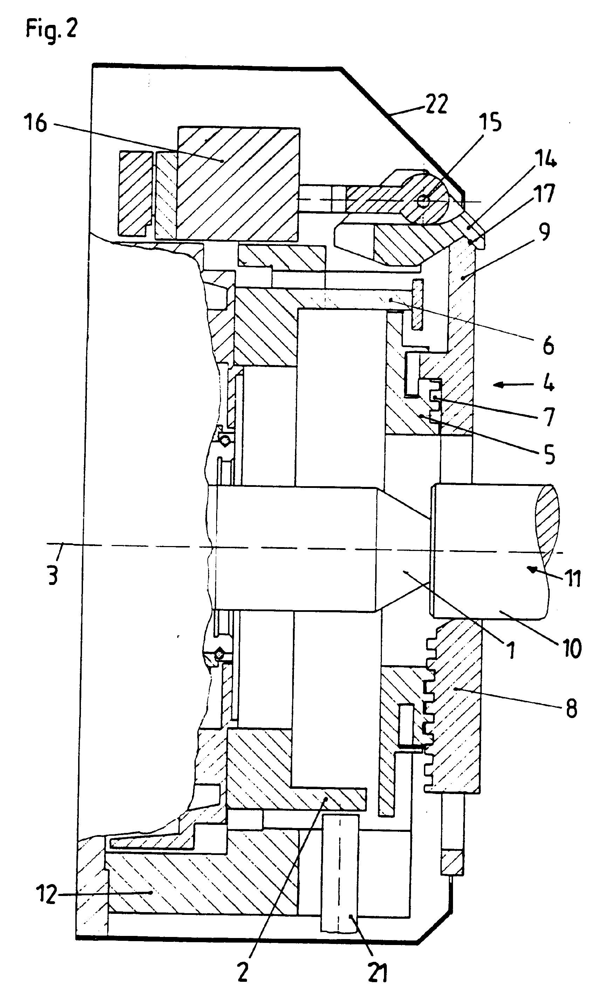

Zum Spannen und Lösen der Spannbacken 4 ist am Maschinengestell drehfest ein Tragring 12 angeordnet, der mit etwas Abstand den Tragkranz 2 umschließt. In radial verlaufenden Schlitzen 13 sind am Umfang verteilt drei als Kipphebel ausgebildete Stoppanschläge 14 auf Bolzen 15 schwenkbar gelagert und durch Spannzylinder 16 schwenkbar. In der in Figur 2 oben eingezeichneten Spannstellung wird die Trägerplatte 9 durch die drei Stoppanschläge 14 zur Drehachse 3 zentriert und auch in axialer Richtung fixiert und zwar dadurch, daß die Stoppanschläge 14 V-förmige Enden aufweisen, die mit entsprechend V-förmig ausgebildeten Außenrändern 17 dreier Umfangsaussparungen 18 anliegen. Die Enden dieser sich jeweils über etwa 90° erstreckenden Umfangsaussparungen 18 kommen je nach Drehrichtung an den Stoppanschlägen 14 zur Anlage. Die Stoppanschläge 14 sind in Umfangsrichtung in den Schlitzen 13 etwas bewegbar. Mindestens bei einem der Stoppanschläge 14 kann dadurch dessen Bolzen 15 zusammen mit dem Stoppanschlag 14 gegen die Feder 19 beim Anziehen der Spannbacken bewegt werden, wobei dann über einen Schalter 20 zur Drehmomentbegrenzung die Spannzylinder 16 umgesteuert und so die Stoppanschläge 14 zurückgezogen und die Trägerplatte 9 freigegeben wird. Damit kann über die angetriebene Spitze 1, den Trägerkranz 2 und das Spannelement 4 das Werkstück 11 angetrieben werden.

Zum Lösen der Einspannung des Werkstücks 10 erfolgt bei umgekehrter Drehrichtung des Antriebs wieder ein Einschwenken der Stoppanschläge 14 in die Umfangsaussparungen 18. Beim Erreichen der Aussparungsenden wird die Trägerplatte 9 von den Stoppanschlägen 14 festgehalten und durch die Weiterdrehung der Mitnehmerscheibe 5 über die Mitnehmer 6 erfolgt über das Plangewinde 7 eine radiale Verschiebung der Spannbacken 8 nach außen.

Zur Begrenzung der Öffnungsbewegung der Spannbacken 8 ist im Tragring 12 ein Impulsgeber 21 angeordnet, der nach einer vorgewählten Durchlaufzahl der Umfangsaussparungen 18 den Antrieb der Spitze 1 und des Trägerkranzes 2 stillsetzt. Durch die vorgegebene Anzahl der Impulse kann die Öffnungsweite der Spannbacken 8 vorgegeben werden, um ausreichend Platz zum Einführen des Endes 10 eines neuen Werkstücks 11 zu schaffen, aber gleichzeitig die Spannbacken 8 nicht unnötig weit radial nach außen zu verschrauben. Ggf. bei wechselnden Durchmessern der Werkstücke 11 kann durch EDV-Steuerung die Öffnungsweite auch im erforderliche Bereich vorgegeben werden.

Die ganze beschriebene Vorrichtung kann durch eine Abdeckung 22 zur Unfallverhütung umschlossen sein.

## Patentansprüche

1. Vorrichtung zum Mitnehmen eines zwischen Spitzen (1) einer Werkzeugmaschine, insbesondere einer Rundschleifmaschine, Drehbank o.dgl., gehaltenen um seine Drehachse (3) angetriebenen Werkstücks (11), mit einem ein Ende (10) des Werkstücks (11) aufnehmenden Spannelement (4), das mit einer angetriebenen Spitze (1) über mindestens einen Mitnehmer (6) drehgekoppelt ist und das mindestens zwei über ein Plangewinde (7) symmetrisch gegeneinander bewegbare das Ende (10) des Werkstücks (11) lösbar festhaltende in einer Trägerplatte (9) verschiebbar geführte Spannbacken (8) aufweist, **dadurch gekennzeichnet**, daß das Spannelement (4) eine drehfest mit der Spitze (1) verbundene Mitnehmerscheibe (5) aufweist, die das, die Spannbacken (8) bewegendes Plangewinde (7) trägt und daß die Trägerplatte (9) oder die Spannbacken (8) mit einem von der angetriebenen Spitze (1) drehunabhängigen Stoppanschlag (14) zum Spannen oder Lösen der Spannbacken zusammenwirkt.

2. Vorrichtung nach Anspruch 1, dadurch gekennzeichnet, daß die, die radial verschiebbaren Spannbacken (8) tragende Trägerplatte (9) und die das Plangewinde (7) aufweisende Mitnehmerscheibe (5) um die Drehachse (3) gegeneinander drehbar aneinander geführt sind.

3. Vorrichtung nach Anspruch 1 oder 2, dadurch gekennzeichnet, daß die Trägerplatte (9) mit radialem Spiel auf mindestens einem, vorzugsweise drei Mitnehmern (6) eines mit der angetriebenen Spitze (1) umlaufenden Trägerkranzes (2) etwa konzentrisch zur Drehachse (3) getragen ist.

4. Vorrichtung nach Anspruch 1, dadurch gekennzeichnet, daß der Stoppanschlag (14) über eine Drehmomentbegrenzung steuerbar ist.

5. Vorrichtung nach Anspruch 4, dadurch gekennzeichnet, daß der Stoppanschlag (14) in Umfangsrichtung gegen eine Feder (19) verschiebbar ist und mit einem Schalter (20) oder Fühler zusammenwirkt, über den der Stoppanschlag (14) bei Drehmomentüberschreitung lösbar ist.

6. Vorrichtung nach Anspruch 4 oder 5, dadurch gekennzeichnet, daß der Stoppanschlag (14) als Kipphebel ausgebildet auf einem in Umfangsrichtung verlaufenden Bolzen (15) schwenkbar gelagert ist und daß dieser Bolzen (15) oder der Kipphebel gegen die Wirkung einer Feder (19) gegen den Schalter (20) oder Fühler verschiebbar geführt ist.

7. Vorrichtung nach einem der Ansprüche 1 bis 6, dadurch gekennzeichnet, daß der Stoppanschlag (14) in einem radialen Schlitz (13) vorzugsweise eines Trägerrings (12) bewegbar angeordnet ist.

8. Vorrichtung nach einem der Ansprüche 1 bis 7, dadurch gekennzeichnet, daß ein Impulszähler (21) vorgesehen ist, durch den die Bewegung der Spannbacken (8) im Plangewinde (7) bzw. der die Spannbacken (8) tragenden Trägerplatte (9) relativ zur Mitnehmerscheibe (5) bestimmbar ist.

9. Vorrichtung nach Anspruch 8, dadurch gekennzeichnet, daß über den Impulszähler (21) der Drehantrieb der Spitze (1) stillsetzbar ist und/oder der oder die Stoppanschläge (14) lösbar sind.

10. Vorrichtung nach Anspruch 3 und 8, dadurch gekennzeichnet, daß der Impulszähler (21) mit einem oder mehreren Vorsprüngen und/oder Aussparungen (Umfangsaussparungen 18) des angetriebenen, um die Drehachse (3) drehbaren Trägerkranzes (2) oder der Mitnehmerscheibe (5) zusammenwirkt.

## Claims

1. Apparatus for entraining a workpiece (11) which is held between centres (1) of a machine tool, in particular a circular grinding machine, turning lathe or the like, and which is driven about its axis of rotation (3), comprising a clamping element (4) for receiving the end (10) of the workpiece (11), which is rotationally coupled to a driven centre (1) by way of at least one entrainment member (6) and which has at least two clamping jaws (8) which are movable symmetrically relative to each other by way of a face screwthread (7) and which releasably secure the end (10) of the workpiece (11) and which are guided displaceably in a carrier plate (9), characterised in that the clamping element (4) has an entrainment disc (5) which is non-rotatably connected to the centre (1) and which carries the face screwthread (7) which moves the clamping jaws (8), and that the carrier plate (9) or the clamping jaws (8) co-operates with a stop abutment (14), which is rotationally independent of the driven centre (1), for clamping or releasing the clamping jaws.

2. Apparatus according to claim 1 characterised in that the carrier plate (9) which carries the radially displaceable clamping jaws (8) and the entrainment disc (5) which has the face screwthread (7) are guided on each other rotatably relative to each other about the axis of rotation (3).

3. Apparatus according to claim 1 or claim 2 characterised in that the carrier plate (9) is carried with radial play substantially concentrically relative to the axis of rotation (3) on at least one and preferably three entrainment members (6) of a carrier ring (2) which rotates with the driven centre (1).

4. Apparatus according to claim 1 characterised in that the stop abutment (14) is controllable by way of a torque limitation.

5. Apparatus according to claim 4 characterised in that the stop abutment (14) is displaceable in the peripheral direction against a spring (19) and co-operates with a switch (20) or sensor, by way of which the stop abutment (14) is releasable when the torque value is exceeded.

6. Apparatus according to claim 4 or claim 5 characterised in that the stop abutment (14) in the form of a rocking lever is mounted pivotably on a pin (15) which extends in the peripheral direction and that said pin (15) or the rocking lever is guided displaceably against the action of a spring (19) relative to the switch (20) or sensor.

7. Apparatus according to one of claims 1 to 6 characterised in that the stop abutment (14) is arranged movably in a radial slot (13), preferably in a support ring (12).

8. Apparatus according to one of claims 1 to 7 characterised in that there is provided a pulse counter (21) for determining the movement of the clamping jaws (8) in the face screwthread (7) or of the carrier plate (9) carrying the clamping jaws (8), relative to the entrainment disc (5).

9. Apparatus according to claim 8 characterised in that by way of the pulse counter (21) the rotary drive of the centre (1) can be stopped and/or the stop abutment or abutments (14) can be released.

10. Apparatus according to claim 3 and claim 8 characterised in that the pulse counter (21) co-operates with one or more projections and/or recesses (peripheral recesses 18) of the driven carrier ring (2) which is rotatable about the axis of rotation (3) or of the entrainment disc (5).

## Revendications

1. Dispositif pour entraîner une pièce (11) montée entre les pointes (1) d'une machine-outil, notamment d'une machine de rectification cylindrique, un tour ou analogue, et qui est entraînée en rotation autour de son axe de rotation (3), comprenant un élément de serrage (4) recevant une extrémité (10) de la pièce (11), qui est accouplée en rotation avec une pointe entraînée (1) par l'intermédiaire d'au moins un doigt d'entraînement (6), et qui présente au moins deux mors de serrage (8) guidées mobiles en translation dans un plateau porteur (9), qui tiennent l'extrémité (10) de la pièce (11) d'une façon démontable, et qui peuvent se déplacer l'une par rapport à l'autre, de façon symétrique, sous l'action d'un filetage plan (7), caractérisé en ce que l'élément de serrage (4) comporte un disque entraîneur (5) couplé rigidement en rotation à la pointe (1), qui porte le filetage plan (7) servant à déplacer les mors de serrage (8), et en ce que le plateau porteur (9) ou les mors de serrage (8) coopère(nt) avec une butée d'arrêt (14) indépendante en rotation de la pointe entraînée (1) pour serrer ou desserrer les mors de serrage.

2. Dispositif selon la revendication 1, caractérisé en ce que le plateau porteur (9) qui porte les mors de serrage (8) mobiles radialement en translation, et le disque entraîneur (5) qui présente le filetage plan (7) sont guidés de manière à pouvoir tourner l'un par rapport à l'autre autour de l'axe de rotation (3).

3. Dispositif selon la revendication 1 ou 2, caractérisé en ce que le plateau porteur (9) est porté, sensiblement concentriquement à l'axe de rotation (3) et avec un jeu radial, sur au moins un, et de préférence trois, doigts(s) d'entraînement (6) appartenant à une couronne porteuse (2) qui tourne avec la pointe entraînée (1).

4. Dispositif selon la revendication 1, caractérisé en ce que la butée d'arrêt (14) peut être commandée par l'intermédiaire d'un organe de limitation du couple.

5. Dispositif selon la revendication 4, caractérisé en ce que la butée d'arrêt (14) peut coulisser dans une direction circonférentielle à l'encontre de l'action d'un ressort (19), et coopère avec un commutateur (20) ou un palpeur, par l'intermédiaire duquel la butée d'arrêt (14) peut être libérée en cas de dépassement du couple.

6. Dispositif selon la revendication 4 ou 5, caractérisé en ce que la butée d'arrêt (14), constituée par un levier basculant, est montée pour pivoter sur un axe (15) s'étendant dans une direction circonférentielle, et en ce que cet axe (15), ou le levier basculant, est guidé de façon à pouvoir coulisser à l'encontre de l'action d'un ressort (19), vers le commutateur (20) ou le palpeur.

7. Dispositif selon une des revendications 1 à 6, caractérisé en ce que la butée d'arrêt (14) est agencée mobile dans une fente radiale (13) ménagée de préférence dans un anneau porteur (12).

8. Dispositif selon une des revendications 1 à 7, caractérisé en ce qu'il est prévu un compteur d'impulsions (21), qui peut déterminer le mouvement des mors de serrage (8) dans le filetage plan (7), ou le mouvement du plateau porteur (9) qui porte les mors de serrage (8), relativement au disque entraîneur (5).

9. Dispositif selon la revendication 8, caractérisé en ce que l'entraînement en rotation de la pointe (1) peut être mis à l'arrêt et/ou la ou les butée(s) d'arrêt (14) peut ou peuvent être libérée(s) au moyen du compteur d'impulsions (21).

10. Dispositif selon les revendications 3 et 8, caractérisé en ce que le compteur d'impulsions (21) coopère avec une ou plusieurs saillies et/ou encoches (encoches circonférentielles 18) de la couronne porteuse (2) entraînée, qui peut tourner autour de l'axe de rotation (3), ou du disque entraîneur (5).
